# EUROPÄISCHE PATENTSCHRIFT

(11) **EP 1 094 916 B1**
(45) Veröffentlichungstag und Bekanntmachung des Hinweises auf die Patenterteilung: **23.01.2002**
(21) Anmeldenummer: 99926370.0
(22) Anmeldetag: 22.05.1999
(51) Int. Cl.: B23Q 3/157

(54) **WERKZEUGWECHSELVORRICHTUNG FÜR EIN BEARBEITUNGSZENTRUM**
TOOL CHANGING DEVICE FOR A MACHINING CENTER
DISPOSITIF DE CHANGEMENT D'OUTIL POUR UN CENTRE D'USINAGE

(30) Priorität: 08.07.1998 DE 19830392
(43) Veröffentlichungstag der Anmeldung: 02.05.2001
(73) Patentinhaber: Deckel Maho Seebach GmbH, 99846 Seebach (DE)
(72) Erfinder: GERMERODT, Frank, D-07407 Uhlstädt (DE); LASCH, Thorsten, D-99880 Aspach (DE); STENZEL, Eberhard, D-07549 Gera (DE)
(74) Vertreter: Thielking, Bodo, Dipl.-Ing.
(86) Internationale Anmeldenummer: EP9903534
(87) Internationale Veröffentlichungsnummer: WO0002703

(56) Entgegenhaltungen:
- EP-A- 0 342 257
- DE-A- 3 501 113
- JP-A- 3 010 736
- PATENT ABSTRACTS OF JAPAN vol. 017, no. 043 (M-1360), 27. Januar 1993 (1993-01-27) & JP 04 262826 A (MURATA MACH LTD), 18. September 1992 (1992-09-18)

## Beschreibung

### TECHNISCHES GEBIET

Die Erfindung betrifft eine Werkzeugwechselvorrichtung für ein Bearbeitungszentrum nach dem Oberbegriff des Patentanspruchs 1.

### STAND DER TECHNIK

Eine bekannte Werkzeugwechselvorrichtung dieser Art (DE 40 09 537 C2) weist einen Werkzeugwechselständer auf, der längs einer Linearführung zwischen einer Magazinübergabeposition und einer Spindelübergabeposition bewegbar ist. Der Werkzeugwechselständer trägt eine Greifeinrichtung mit zwei Greifern, die um eine Achse zwischen einer horizontalen Lage und einer vertikalen Lage schwenkbar sind. In der Spindelübergabeposition wird ein gebrauchtes Werkzeug von der Werkzeugspindel der Bearbeitungsmaschine an den einen Greifer übergeben und ein neues Werkzeug aus dem zweiten Greifer entnommen. Außer dem Schwenkantrieb für die Greifer und dem Verfahrantrieb für den Werkzeugwechselständer benötigt die Werkzeugwechselvorrichtung einen Antrieb zum Öffnen und Schließen der Greifer. Die Vielzahl der Antriebe macht die Vorrichtung teuer. Die Werkzeuge müssen bei der bekannten vorrichtung zwischen dem Magazin und dem Werkzeugwechselständer mittels eines besonderen Handhabungsgeräts getauscht werden. Der Transport eines Werkzeugs mit der Bereitstellung durch das Magazin, der Übergabe an das Handhabungsgerät, der Weitergabe an den Wechselständer und dem Transport zur Spindelübergabeposition einschließlich des Schwenkens der Greifer benötigt soviel Zeit, das die Einsatzdauer der Werkzeuge bei Hochgeschwindigkeits-Bearbeitungszentren überschritten wird. Der Nutzungsgrad der Bearbeitungsmaschine verschlechtert sich, weil die Maschine auf das Folgewerkzeug warten muß.

Es ist ferner eine Blechbearbeitungsmaschine mit einem Werkzeugmagazin bekannt (DE 37 01 858 A1), dessen Werkzeugaufnahmen umlaufen. Mit Übergabevorrichtungen werden die Werkzeuge aus dem Werkzeugmagazin in eine Transportvorrichtung eingesetzt bzw. aus dieser Transportvorrichtung nach Benutzung des Werkzeugs wieder entnommen. Die Transportvorrichtung transportiert das Werkzeug aus einer Aufnahmeposition in die Bearbeitungsposition. Sobald die Bearbeitung abgeschlossen ist, wird das benutzte Werkzeug aus der Bearbeitungsposition in eine Entnahmestellung verfahren, während ein vorher aus dem Magazin an die Transportvorrichtung übergebenes neues Werkzeug mit der Transportvorrichtung in die Bearbeitungsposition wandert. Eine derartige Konstruktion ist nur für Maschinen mit ortsfesten Bearbeitungsstellen geeignet. Außerdem erlaubt eine solche Vorrichtung keinen besonders schnellen Zugriff auf eine Vielzahl unterschiedlicher Werkzeuge, die sämtlich schnell zu wechseln sein müssen.

Es ist ferner eine Werkzeugwechselvorrichtung mit zwei Werkzeugspindeln bekannt (JP 03 010736 A), bei der jeder Werkzeugspindel jeweils nur eine Werkzeughaltevorrichtung zugeordnet ist.

Jede Werkzeughaltevorrichtung muß mit einer zusätzlichen, als Schwenkhebel ausgebildeten Übergabevorrichtung bestückt bzw. entleert werden. Die als Schwenkhebel ausgebildeten Übergabevorrichtungen entnehmen die Werkzeuge aus einem umlaufenden Werkzeugmagazin bzw. legen sie in das umlaufende Werkzeugmagazin ab.

Die bekannte Werkzeugwechselvorrichtung ist nur verwendbar bei Vorsehen von zwei Werkzeugspindeln. Mit ihrer Hilfe ist ein ökonomischer Werkzeugwechsel nicht möglich, da eine Werkzeugspindel stets ungenutzt ist.

### DIE ERFINDUNG

Ausgehend von diesem Stand der Technik liegt der Erfindung die Aufgabe zugrunde, eine einfache Werkzeugwechselvorrichtung zu schaffen, die eine möglichst kurze Werkzeugtransportzeit auch bei großer Anzahl von Werkzeugplätzen aufweist.

Die Lösung dieser Aufgabe erfolgt mit den Merkmalen des Patentanspruchs 1.

Zwischen der ein neues Werkzeug bereitstellenden oder ein gebrauchtes Werkzeug empfangenden Aufnahme des Werkzeugmagazins und der Werkzeugwechselposition finden nur noch einfache Bewegungen statt, die für das gebrauchte Werkzeug und das neue Werkzeug unabhängig voneinander und einander überlappend erfolgen können. Der Austausch von Werkzeugen erfolgt zeitsparend zwischen nahe beieinander liegenden Positionen, kostengünstig unter Nutzung der Bewegungen der Maschine und ohne Wartezeiten durch Magazinbewegungen.

Bevorzugte Ausgestaltungen der Erfindung ergeben sich aus den Unteransprüchen.

### KURZBESCHREIBUNG DER ZEICHNUNGSABBILDUNG

Nachstehend wird eine bevorzugte Ausführungsform der Erfindung anhand der Zeichnungen näher beschrieben. Es zeigen:
- Figur 1 -: eine perspektivische, schematische Ansicht einer Werkzeugwechselvorrichtung mit schematischer Darstellung des Bewegungsablaufs.

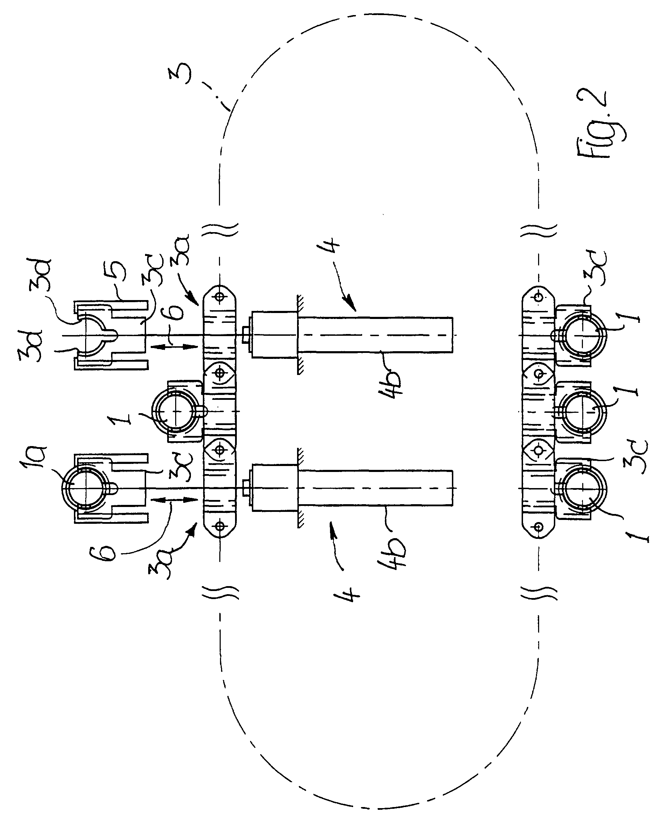

- Figur 2 -: eine schematische Draufsicht eines Teils der Werkzeugwechselvorrichtung gemäß Fig. 1 in vereinfachter Darstellung;
- Figur 3 -: eine schematische Seitenansicht einer Transportvorrichtung der Werkzeugwechselvorrichtung nach Fig. 2;
- Figur 4 -: eine schematische Seitenansicht der Transportvorrichtung gemäß Fig. 3 mit einem Schnitt durch das Werkzeugmagazin und mit einer Darstellung der Werkzeugspindel in Werkzeugwechselposition;

### BESTER WEG ZUR AUSFÜHRUNG DER ERFINDUNG

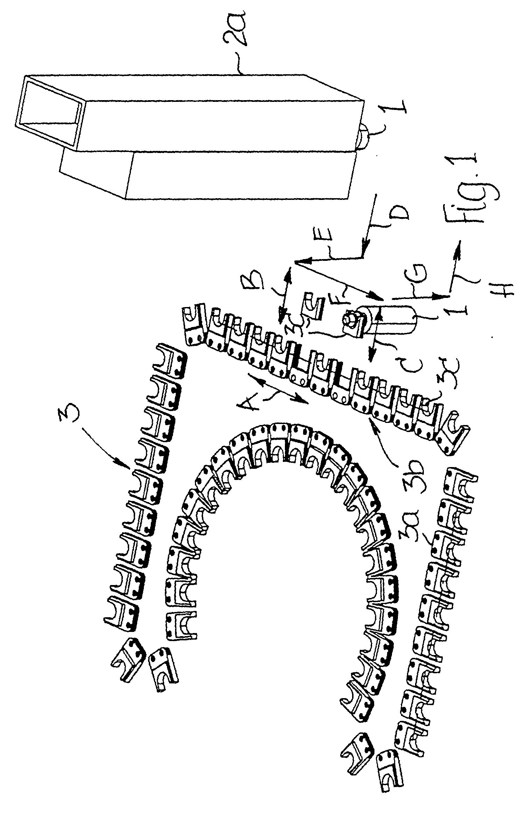

Die Werkzeugwechselvorrichtung weist ein Werkzeugmagazin 3 und Transportvorrichtungen 4 auf. Das Werkzeugmagazin 3 weist eine geschlossene Kette von Werkzeugaufnahmen 3a auf, die von einem nicht dargestellten Antrieb in Umlauf versetzt wird. In den Werkzeugaufnahmen 3a des Werkzeugmagazins 3 werden Führungsplatten 3c gehalten, die mit Werkzeugen 1 bestückt sind. In Fig. 1 ist von dem Werkzeugmagazin 3 nur eine Reihe von als Kassetten ausgebildeten Werkzeugaufnahmen 3a dargestellt, die in einem der Werkzeugspindel 2 benachbarten Bereich einen geraden Umlaufbahnbereich 3b bilden.

Die Kette wird von dem Antrieb angehalten, wenn ausgewählte Werkzeugaufnahmen 3a zwischen den die Werkzeugwechselposition bildenden Führungen 5 und den Werkzeugtransportvorrichtungen 4 stehen. Die Kolben-Zylindereinheiten 4b werden mit den Führungsplatten 3c dieser ausgewählten Werkzeugaufnahmen 3a gekoppelt. Danach können die Führungsplatten 3c in Richtung der Doppelpfeile 6 von den Kolben-Zylindereinheiten 4b in die Führungen 5 eingeschoben bzw. aus ihnen zurückgezogen werden. Von den zwei in Werkzeugwechselposition befindlichen Führungsplatten 3c ist eine zur Aufnahme eines im Einsatz an der Werkzeugspindel 2 befindlichen Werkzeugs bestimmt, während die andere das für die Bearbeitung vorgesehene nächste Werkzeug 1 trägt. Sowohl die Führungsplatten 3c in den Werkzeugaufnahmen 3a als auch die Werkzeuge 1 in den Führungsplatten 3c können mittels nicht dargestellter Federrasten in ihrer Lage gesichert sein.

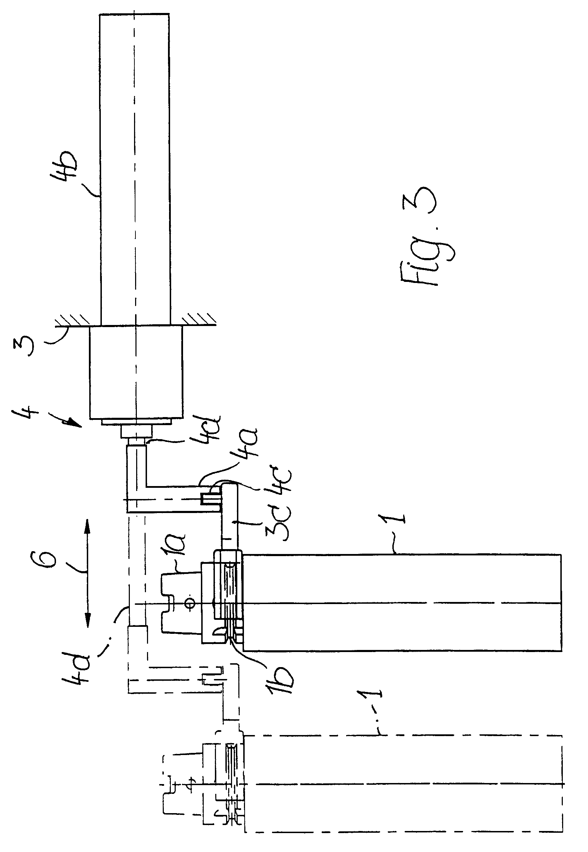

Die an einem ortsfesten Bereich des Werkzeugmagazins 3 befestigte Kolben-Zylindereinheit 4b der Werkzeugtransportvorrichtung 4 ist mit seiner Kolbenstange 4d mit einer in Fig. 3 dargestellten Werkzeughaltevorrichtung 4a verbunden, die an ihrem gegenüberliegenden Ende ein Kupplungselement 4c trägt. Das Kupplungselement 4c stellt die lösbare Verbindung zur Führungsplatte 3c her. In der Führungsplatte 3c ist ein nur schematisch angedeutetes Werkzeug 1 gelagert, das zur Aufnahme in einer Werkzeugspindel 2 über einen Kegelschaft 1a verfügt. Neben dem Kegelschaft 1a ist das Werkzeug 1 mit einer keilförmigen Ringnut 1b versehen, in die kegelstumpfförmige Stege 3d der Führungsplatten 3c eingreifen. Die gestrichelte Lage des Werkzeugs 1 in Fig. 3 stellt die Werkzeugwechselposition der Werkzeugransportvorrichtung 4 dar. Die Darstellung läßt erkennen, daß das Werkzeugmagazin 3 bei ausgefahrener Kolbenstange 4d ungehindert umlaufen kann.

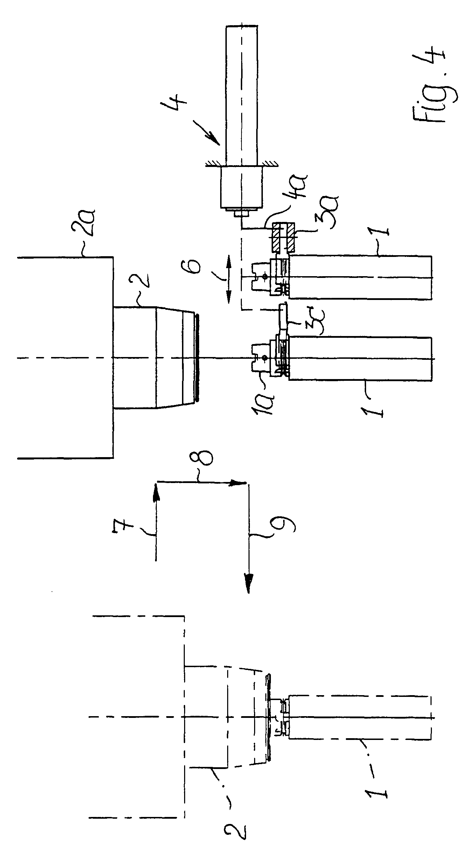

In Fig. 4 ist der Übergabevorgang eines neuen Werkzeugs 1 an die Werkzeugspindel 2 eines Bearbeitungszentrums dargestellt, von dem nur der Spindelkasten 2a angedeutet ist. Das voll ausgezogene, linke Werkzeug 1 befindet sich in der Übergabeposition. Das rechte Werkzeug wird in einer Werkzeugaufnahme 3a des Magazins 3 gehalten. Die Werkzeugspindel 2 ist in Richtung des Pfeiles 7 soweit verfahren, daß die Rotationsachse der Spindel 2 mit der Achse des Kurzkegelhalters 1a fluchtet. Durch das Absenken der Spindel 2 in Pfeilrichtung 8 wird der Kurzkegelhalter 1a in die keglige Bohrung der Werkzeugspindel 2 eingeführt und darin geklemmt. Beim Zurückfahren der Werkstückspindel 2 in Pfeilrichtung 9 in die gestrichelt dargestellte Position löst sich das Werkzeug 1 aus der Führungsplatte 3c, da es nur durch eine Federraste gehalten wird.

Der gesamte Bewegungsablauf des Werkzeugwechsels ist in Fig. 1 durch Pfeile verdeutlicht. Die Kassetten können in Pfeilrichtung A verschoben werden. Zwei Führungsplatten 3c, von denen nur eine mit einem Werkzeug 1 beladen ist, stehen in der Werkzeugwechselposition bereit. Sie können in den Pfeilrichtungen B und C zwischen der Werkzeugwechselposition und der jeweiligen Werkzeugaufnahme 3a verschoben werden. Nach Abschluß der Bearbeitung mit einem in der Werkstückspindel 2 gehaltenen Werkzeug 1 verfährt der Spindelkasten 2a in Richtung des Pfeiles D, wobei sich das Werkzeug 1 in die leere Führungsplatte 3c einfädelt. Die Bewegung der Werkstückspindel 2 in Richtung Pfeil E löst das gebrauchte Werkzeug 1 aus der Werkzeugspindel 2. Die Werkstückspindel 2 wird in Pfeilrichtung F bis über das bereitgestellte, neue Werkzeug 1 verfahren. Durch Absenken (Pfeil G) der Werkzeugspindel 2 wird das neue Werkzeug 1, wie im Zusammenhang mit Fig. 4 bereits beschrieben, von der Werkzeugspindel 2 übernommen. Pfeil H symbolisiert das Entnehmen des Werkzeugs 1 aus der Führungsplatte 3c und die Rückkehr der Spindel zum nächsten Bearbeitungsvorgang. Das abgelegte Werkzeug 1 wird durch die Bewegung der Führungsplatte 3c gemäß Pfeil B in das Werkzeugmagazin 3 zurückgeführt. Das Werkzeugmagazin 3 kann nun das nächste Werkzeug 1 in diese Entnahmeposition takten. Die von dem Werkzeug 1 befreite Führungsplatte 3c bleibt in ihrer Position, um das nun im Einsatz befindliche Werkzeug 1 aufzunehmen. Zum nächsten Werkzeugwechsel muß die Werkzeugspindel 2 daher diese Führungsplatte 3c zuerst anfahren.

## Patentansprüche

1. Werkzeugwechselvorrichtung für ein Bearbeitungszentrum, mit mindestens einer Werkzeugspindel (2), in die ein Werkzeug (1) einspannbar ist und die in Spindelachsrichtung und mindestens in einer dazu senkrechten Richtung verfahrbar ist, mit einem Werkzeugmagazin (3) und mit zwei Werkzeughaltevorrichtungen (4a) an einer Transportvorrichtung (4), mit der die Werkzeughaltevorrichtungen (4a) in eine im Bewegungsbereich der Werkzeugspindel (2) liegenden Werkzeugwechselposition verfahrbar sind, in deren einer ein gebrauchtes Werkzeug (1) mittels Bewegung der Werkzeugspindel (2) von dieser ablegbar und aus deren anderer ein neues Werkzeug (1) mittels Bewegung der Werkzeugspindel (2) von dieser entnehmbar ist,
**dadurch gekennzeichnet,**
**daß** jede der mindestens zweifach vorgesehenen Werkzeughaltevorrichtungen (4a) an einer eigenen Transportvorrichtung (4) angeordnet ist, daß die Transportvorrichtungen (4) unabhängig voneinander zwischen der Werkzeugwechselposition und einer Werkzeugaufnahme (3a) des Werkzeugmagazins (3) hin- und herbewegbar sind und daß die Werkzeugaufnahmen (3a) des Werkzeugmagazins (3) umlaufend bewegbar sind.

2. Werkzeugwechselvorrichtung nach Anspruch 1,
**dadurch gekennzeichnet,**
**daß** jede Transportvorrichtung (4) zwischen der Werkzeugwechselposition und einer von der Werkzeugaufnahme (3a) des Werkzeugmagazins (3) der anderen Transportvorrichtung (4) verschiedenen Aufnahme (3a) hin- und herbewegbar ist.

3. Werkzeugwechselvorrichtung nach Anspruch 1 oder 2,
**dadurch gekennzeichnet,**
**daß** jede Transportvorrichtung (4) wechselweise zum Abgeben eines neuen Werkzeugs (1) und Aufnehmen eines gebrauchten Werkzeugs (1) ausgebildet ist.

4. Werkzeugwechselvorrichtung nach einem oder mehreren der Ansprüche 1 bis 3,
**dadurch gekennzeichnet,**
**daß** jede Werkzeugaufnahme (3a) des Werkzeugmagazins (3) eine Werkzeugkassette aufweist, in welcher ein Werkzeug (1) entnehmbar gehalten ist.

5. Werkzeugwechselvorrichtung nach einem oder mehreren der Ansprüche 1 bis 3,
**dadurch gekennzeichnet,**
**daß** in jeder Werkzeugkassette eine Führungsplatte (3c) verschieblich gehalten ist, in welcher ein Werkzeug (1) aufgenommen ist.

6. Werkzeugwechselvorrichtung nach einem oder mehreren der Ansprüche 1 bis 4,
**dadurch gekennzeichnet,**
**daß** die Transportvorrichtung (4) von einer Kolben-Zylinder-Einheit (4b) angetrieben ist, die mit der Führungsplatte (3c) des in Wechselposition befindlichen Werkzeugs (1) koppelbar ist.

7. Werkzeugwechselvorrichtung nach einem oder mehreren der Ansprüche 1 bis 5,
**dadurch gekennzeichnet,**
**daß** die Führungsplatten (3c) in der Werkzeugwechselposition in Führungen (5) gehalten sind.

8. Werkzeugwechselvorrichtung nach einem oder mehreren der Ansprüche 1 bis 6,
**dadurch gekennzeichnet,**
**daß** an jeder Transportvorrichtung (4) mindestens eine Werkzeughaltevorrichtung (4a) angeordnet ist.

9. Werkzeugwechselvorrichtung nach einem oder mehreren der Ansprüche 1 bis 7,
**dadurch gekennzeichnet,**
**daß** das Werkzeugmagazin (3) als Kettenmagazin ausgebildet ist, dessen Kettenglieder durch die Werkzeugaufnahmen (3a) gebildet sind.

10. Werkzeugwechselvorrichtung nach einem oder mehreren der Ansprüche 1 bis 8,
**dadurch gekennzeichnet,**
**daß** die Werkzeugaufnahmen (3a) des Werkzeugmagazins (3) taktweise fortschaltbar sind.

11. Werkzeugwechselvorrichtung nach einem oder mehreren der Ansprüche 1 bis 9,
**dadurch gekennzeichnet,**
**daß** die Werkzeugaufnahmen (3a) in einem der Werkzeugspindel (2) benachbarten Bereich geradlinig geführt sind.

12. Werkzeugwechselvorrichtung nach einem oder mehreren der Ansprüche 1 bis 10,
**dadurch gekennzeichnet,**
**daß** die Werkzeugwechselposition dem Werkzeugmagazin (3) eng benachbart und außerhalb des Bewegungsbereichs des Magazins (3) und der darin gespeicherten Werkzeuge (1) ist.

13. Werkzeugwechselvorrichtung nach einem oder mehreren der Ansprüche 1 bis 12,
**dadurch gekennzeichnet,**
**daß** in den Aufnahmen (3a) des Werkzeugmagazins (3) enthaltene Werkzeuge (1) zumindest in der Nähe der Werkzeugwechselposition in einer der Spannlage des Werkzeugs (1) in der Werkzeugspindel (2) entsprechenden Ausrichtung gehalten sind.

## Claims

1. Tool changing device for a machining centre, having at least one tool spindle (2) in which a tool (1) can be clamped and which is movable in the axial direction of the spindle and at least in a direction perpendicular thereto, with a tool magazine (3) and with two tool holding devices (4a) on a transport device (4), with which the tool holding devices (4a) are movable into a tool changing position lying in the area of movement of the tool spindle (2), so that in one position a used tool (1) can be set down by moving the tool spindle (2) and from the other position a new tool (1) can be removed by moving the tool spindle (2),
**characterised in that**
each of the at least duplicated tool holding devices (4a) is mounted on its own transport device (4), that the transport devices (4) are movable to and fro independently of each other between the tool changing position and a tool holder (3a) of the tool magazine (3) and that the tool holders (3a) of the tool magazine (3) are movable in a circulating manner.

2. Tool changing device according to claim 1,
**characterised in that** each transport device (4) is movable to and fro between the tool changing position and a holder (3a) which is different from the tool holder (3a) of the tool magazine (3) of the other transport device (4).

3. Tool changing device according to claim 1 or 2
**characterised in that** each transport device (4) is formed for alternately delivering a new tool (1) and receiving a used tool (1).

4. Tool changing device according to one or more of claims 1 to 3 **characterised in that** each tool holder (3a) of the tool magazine (3) has a tool cassette in which a tool (1) is held removable.

5. Tool changing device according to one or more of claims 1 to 3 **characterised in that** a guide plate (3c) is held displaceable in each tool cassette and a tool (1) is received in the guide plate (3c).

6. Tool changing device according to one or more of claims 1 to 4 **characterised in that** the transport device (4) is driven by a piston cylinder unit (4b) which can be coupled to the guide plate (3c) of the tool (1) which is located in the changing position.

7. Tool changing device according to one or more of claims 1 to 5 **characterised in that** the guide plates (3c) are held in the tool changing position in guides (5).

8. Tool changing device according to one or more of claims 1 to 6 **characterised in that** at least one tool holding device (4a) is mounted on each transport device (4).

9. Tool changing device according to one or more of claims 1 to 7 **characterised in that** the tool magazine (3) is formed as a chain magazine whose chain links are formed by the tool holders (3a).

10. Tool changing device according to one or more of claims 1 to 8 **characterised in that** the tool holders (3a) of the tool magazine (3) can be advanced rhythmically.

11. Tool changing device according to one or more of claims 1 to 9 **characterised in that** the tool holders (3a) are guided in a straight line in a region adjoining the tool spindle (2).

12. Tool changing device according to one or more of claims 1 to 10 **characterised in that** the tool changing position closely adjoins the tool magazine (3) and is outside of the area of movement of the magazine (3) and the tools (1) stored therein.

13. Tool changing device according to one or more of claims 1 to 12 **characterised in that** tools (1) contained in the tool holders (3a) of the tool magazine (3) are held at least close to the tool changing position in an orientation corresponding to the clamping position of the tool (1) in the tool spindle (2).

## Revendications

1. Dispositif de changement d'outil pour un centre d'usinage comprenant, au moins, une broche (2) qui peut être déplacée dans le sens de son axe et, au moins, un sens perpendiculaire à celui-ci, et dans laquelle un outil (1) peut être serré, ainsi qu'un magasin d'outils (3) et deux dispositifs porte-outil (4a) sur une installation de transport (4) qui permet de les conduire en position de changement d'outil située dans la zone d'action de la broche (2), un outil utilisé (1) pouvant être déposé dans l'un de ces dispositifs porte-outil (4a) et un nouvel outil enlevé de l'autre, par mouvement adéquat de la broche (2),
**caractérisé en ce que**
chacun des dispositifs porte-outil (4a), prévus au moins au nombre de deux, est disposé sur son propre dispositif de transport (4), ces dispositifs de transport (4) étant mobiles en va-et-vient, entre la position de changement d'outil et un récepteur d'outil (3a) du magasin (3), indépendemment l'un de l'autre, et les récepteurs (3a) du magasin d'outils (3) étant en circulation.

2. Dispositif de changement d'outil selon la revendication 1,
**caractérisé en ce que**
chaque dispositif de transport (4) peut être mû en va-et-vient, entre la position de changement d'outil et un récepteur d'outil (3a) qui diffère du récepteur d'outil (3a) du magasin d'outils (3) de l'autre dispositif de transport (4).

3. Dispositif de changement d'outil selon la revendication 1 ou 2,
**caractérisé en ce que**
chaque dispositif de transport (4) est conçu, alternativement, pour la remise d'un nouvel outil (1) et la reprise d'un outil utilisé (1).

4. Dispositif de changement d'outil selon une ou plusieurs revendications 1 à 3,
**caractérisé en ce que**
chaque récepteur d'outil (3a) du magasin d'outils (3) présente une cassette, dans laquelle un outil (1) est maintenu, prêt à l'enlèvement.

5. Dispositif de changement d'outil selon une ou plusieurs revendications 1 à 3,
**caractérisé en ce que**,
dans chaque cassette, une plaque de guidage (3c), accueillant un outil (1), est maintenue, déplaçable.

6. Dispositif de changement d'outil selon une ou plusieurs revendications 1 à 4,
**caractérisé en ce que**
le dispositif de transport (4), est entraîné par une unité cylindre-piston (4b) qui peut être accouplée avec la plaque de guidage (3c) contenant l'outil (1) en position de changement.

7. Dispositif de changement d'outil selon une ou plusieurs revendications 1 à 5,
**caractérisé en ce que**
les plaques de guidage (3c) en position de changement d'outil, sont maintenues dans des guides (5).

8. Dispositif de changement d'outil selon une ou plusieurs revendications 1 à 6,
**caractérisé en ce que**
un dispositif porte-outil (4a), au moins, est coordonné à chaque dispositif de transport (4).

9. Dispositif de changement d'outil selon une ou plusieurs revendications 1 à 7,
**caractérisé en ce que**
le magasin d'outils (3) est conçu en tant que magasin à chaîne dont les maillons sont formés par les récepteurs d'outils (3a).

10. Dispositif de changement d'outil selon une ou plusieurs revendications 1 à 8,
**caractérisé en ce que**
les récepteurs d'outils (3a) du magasin d'outils (3) peuvent être déplacé en avance rythmée.

11. Dispositif de changement d'outil selon une ou plusieurs revendications 1 à 9,
**caractérisé en ce que**
les récepteurs d'outils (3a) sont conduits en ligne droite dans une zone voisine de la broche (3a).

12. Dispositif de changement d'outil selon une ou plusieurs revendications 1 à 10,
**caractérisé en ce que**
la position de changement d'outil avoisine étroitement le magasin d'outils (3) et est située hors de la zone d'action du magasin (3) et des outils (1) qui y sont stockés.

13. Dispositif de changement d'outil selon une ou plusieurs revendications 1 à 12,
**caractérisé en ce que**
les outils (1), contenus dans les récepteurs d'outils (3a) du magasin d'outils (3) sont orientés, tout au moins à proximité de la position de changement d'outil, dans une position qui correspond à leur position de serrage dans la broche (2).
